# EUROPEAN PATENT SPECIFICATION

(11) **EP 1 945 473 B1**
(45) Date of publication and mention of the grant of the patent: **07.01.2009**
(21) Application number: 06836007.2
(22) Date of filing: 17.10.2006
(51) Int. Cl.: B60J 1/16

(54) **VEHICLE SLIDING WINDOW**
FAHRZEUGSCHIEBEFENSTER
FENETRE COULISSANTE DE VEHICULE

(30) Priority: 19.10.2005 TR 200504194
(43) Date of publication of application: 23.07.2008
(73) Proprietor: Canel Otomotiv Sanayi ve Ticaret Anonim Sirketi, 16335 Bursa (TR)
(72) Inventor: YESILOVA, Ali Ihsan, 16335 Bursa (TR); UCAR, Ramazan, 16335 Bursa (TR)
(74) Representative: Iskender, Ibrahim
(86) International application number: PCT/TR2006/000049
(87) International publication number: WO 2007/046779

(56) References cited:
- EP-A- 1 433 633
- US-A1- 2004 144 034

## Description

### TECHNICAL FIELD

The invention relates to the vehicle windows having at least one moving leaf, which changes its position in connection with a fixed frame secured on the vehicle body for use.

The invention relates particularly to the opening and closing mechanism developed in a way to prevent the undesirable motion of the moving leaf caused by any shock or stroke, after the said moving window leaf has approached the fixed window leaf and has been located inside the space formed on the fixed window leaf, owing to the cam mechanisms mounted on the upper and lower part of the moving window leaf being connected with the corresponding curvilinear grooves opened on the rails.

### BACKGROUND ART

It appears that some of the vehicle windows used today are arranged in a way to enable opening and closing for ventilation or other purposes, while others are arranged so that they are not able to be opened or closed Document EP14 33 6 33 A1 describes a prior art window arrangement.

When viewed from the outside, the windows without the ability to open or close have a flat surface or a flat surface after a small indent directed towards the interior volume of the vehicle. There are technical advantages brought about by said flat surface. Owing to said flat surface, there is provided an aesthetic appearance, and also the friction on the vehicle during speeding becomes less as compared to the indented structures. Moreover, especially in case of driving at high speed, the sound of the wind penetrating into the vehicle is less than that for indented or cascaded structures. This condition directly affects the voyage comfort for the passenger particularly for the long distance travels. However, the biggest disadvantage of such windows without the ability to open or close is that they can not be used for ventilation purposes.

The vehicle windows are known, which include a fixed and a moving window leaf that can be used for ventilation purposes. In case of said window leafs being open or closed, there always exists a distance between them and said distance leads to the formation of a cascaded elevation between the window leafs. The cascaded elevation thus formed leads to some drawbacks concerning the aesthetic appearance and sealing. Moving window leaf and the fixed window leaf are frequently located in the canals arranged side by side inside the profile comprising the frame and the moving leaf may move in said canal.

Furthermore, the most important disadvantage of the existing mechanisms is that the moving leaf comes back out due to any shock or stroke, which may form after the moving window leaf has approached the fixed window leaf and has been located inside the space formed on the fixed window leaf. In other words, it is not possible to prevent the uncontrolled movement of the moving window leaf.

In addition, as there is a distance between the two leafs in such vehicle windows, it may be possible to open the window by inserting an object in between. As a result, such windows have important drawbacks with regard to security. Due to the cascaded elevation formed between said window leafs, the vehicles having such windows remain unprotected against the incidences of theft. Because it is easy to open such windows, the vehicles preferred by the thieves bear such windows. Besides, the undesirable elements such as rain, snow waters, dust, etc. may penetrate into the vehicle in connection with the ambient conditions, because of the distance in between the leafs. The distance between the moving and the fixed window leaf is tried to be filled with beam and wick, but naturally in time, said wick becomes worn and broken off due to rain, friction or similar effects or becomes nonfunctional (due to such causes as depression), hence the constituents of the ambience (dust, water, snow, etc.) may easily penetrate inside. The problems like wear arise. Naturally, it becomes also easy for the thieves to open the window due to said space in between the leafs.

As a result, the presence of the need for an opening and closing mechanism which eliminates aforesaid drawbacks and disadvantages and can prevent the undesirable movement of the moving leaf caused by any shock or stroke that may form after the moving leaf has approached the fixed window leaf and has been located inside the space formed on the fixed window leaf, and the insufficiency of the existing solutions have made it necessary to perform an improvement in the relevant technical field.

### OBJECT OF THE INVENTION

Based on the state of the background art, the object of the invention is to realize an novelty in the opening and closing mechanisms used in the windows of the vehicles having the moving leaf, in order to eliminate aforesaid drawbacks.

Another object of the invention is to prevent the moving leaf from coming back out due to any shock or stroke, which may form after the moving window leaf has approached the fixed window leaf and has been located inside the space formed on the fixed window leaf, in other words, to prevent the uncontrolled movement of the moving window leaf.

In order to achieve the said objects, the opening and closing mechanism has been developed for the vehicle windows comprising a fixed window leaf, at least one moving window leaf which may move on the rails in connection with said fixed leaf and be located inside the space on the fixed window leaf, the rail canal formed on said rails, cam mechanisms to provide the connection of said moving window leaf with said rails and at least one groove formed in connection with said cam mechanisms on said rails in a way to prevent the uncontrolled movement of said moving window leaf and at least one lock pin bearing and at least one lock pin connected with said lock pin bearing to provide locking.

According to a preferred embodiment of the invention, at least one rail projection has been formed on said cam mechanism which prevents uncontrolled movement of said moving window leaf by way of connection with said groove.

According to a preferred embodiment of the invention, at least one leaf projection has been formed on said cam mechanism, in a way to be connected with said moving window leaf.

According to a preferred embodiment of the invention, at least one lock pin bearing has been formed, which helps said moving window leaf to be placed inside the space on said fixed window leaf by means of an inwards curvilinear movement.

According to a preferred embodiment of the invention, at least one lock pin has been used, which fits inside said lock pin bearing to provide locking in a way to prevent the undesirable movement of said moving window leaf.

The structural and characteristic features and all the advantages of the invention will be more clearly understood from the enclosed drawings and the detailed description where the reference is being made to these drawings. Hence the evaluation must be based on said drawings and detailed description.

### BRIEF DESCRIPTION OF THE DRAWINGS

- Figure-1:: The general disassembled views have been provided for the fixed frame, rails and the cam mechanisms of the vehicle window.
- Figure-2:: The general disassembled views have been provided for the fixed frame, rails, moving window leaf and the cam mechanisms of the vehicle window.
- Figure-3:: The general assembly views have been provided for the fixed frame, rails, moving window leaf and the cam mechanisms of the vehicle window.

- Figure-4:: The detailed view showing the assembly of the rails and the moving window leaf of the vehicle window.
- Figure-5:: The perspective view has been provided of the cam mechanism that provides the connection of the moving window leaf and the rails.
- Figure-6:: The perspective view has been provided at a different angle, of the cam mechanism that provides the connection of the moving window leaf and the rails.
- Figure-7:: The top view of the rails is provided.
- Figure-8:: The view showing the assembly of the rail and the cam mechanisms.

### REFERENCE NUMBERS

- 1.: Vehicle window
- 2.: Fixed window leaf (frame)
- 3.: Moving window leaf
- 4.: Frame lower edge
- 5.: Frame upper edge
- 6.: Rail
- 7.: Rail canal
- 8.: Groove
- 9.: Cam mechanism
- 10.: Rail projection
- 11.: Leaf projection
- 12.: Space
- 13.: Lock pin
- 14.: Lock pin bearing

### DETAILED DESCRIPTION OF THE INVENTION

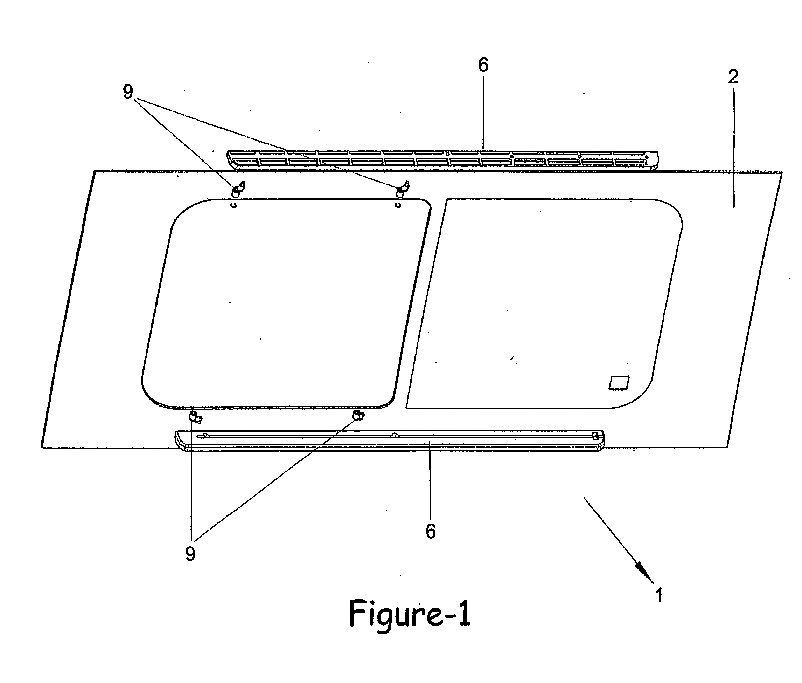

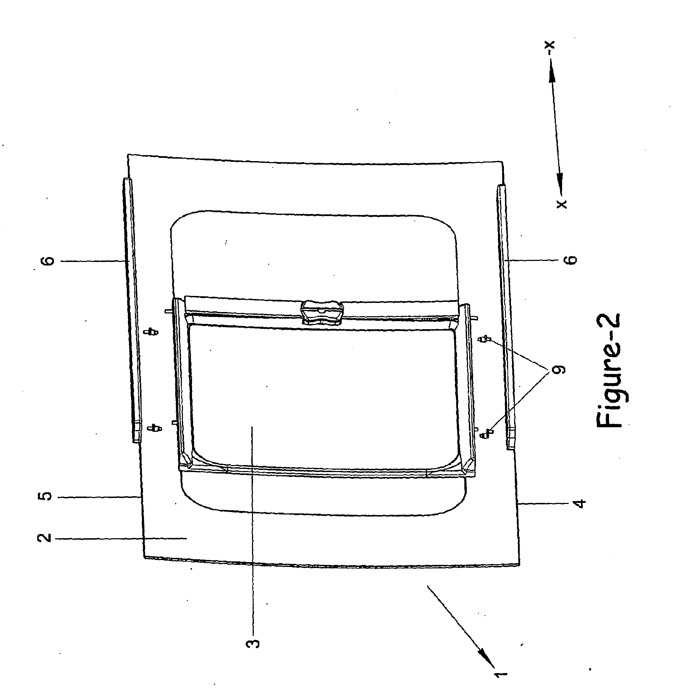

In Figure 1, the perspective is illustrated, showing the vehicle window (1) as viewed from the interior of the vehicle. The vehicle window (1) comprises a fixed window leaf (2) and a moving window leaf (3) shown in Figure 2 moving in connection with said fixed leaf (2) on the rails (6).

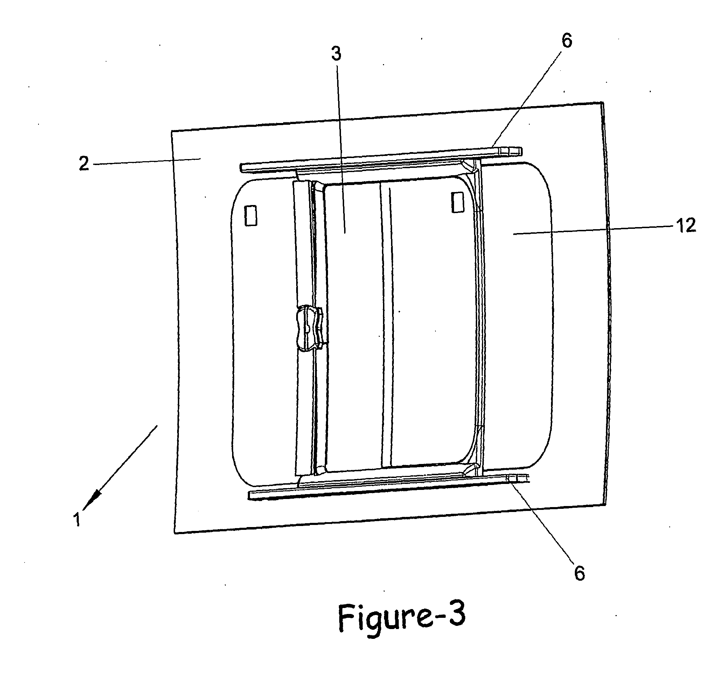

In Figure 2, the overall disassembled view is provided of the fixed frame (2), rails (6), moving window leaf (3) and the cam mechanisms (9) belonging to the vehicle window (1). In Figure 3, the overall assembly view is provided of the fixed frame (2), rails (6), moving window leaf (3) and the cam mechanisms (9) belonging to the vehicle window (1). The moving window leaf (3) may slide and move in connection with the rails (6) in x and -x directions between the rails (6) which are positioned horizontal with respect to the fixed window leaf (2) and parallel to one another at the sections close to the frame lower-upper edges (4, 5). As seen in the figure, the connection of said moving window leaf (3) with the rails (6) is provided by means of the cam mechanisms (9). Said cam mechanisms (9) provide the curvilinear movement needed for the moving window leaf (3) moving on the rails (6) to approach the fixed window leaf (3) and to be located inside the space (12) formed on the fixed leaf (2).

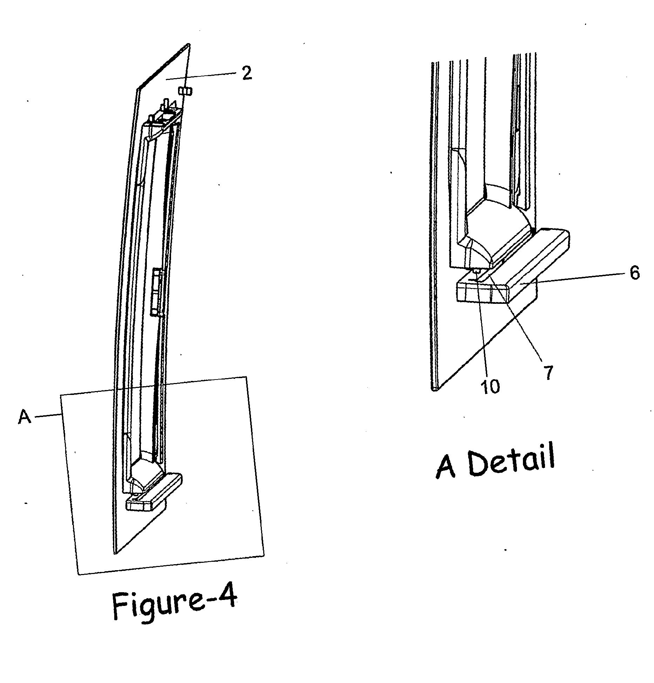

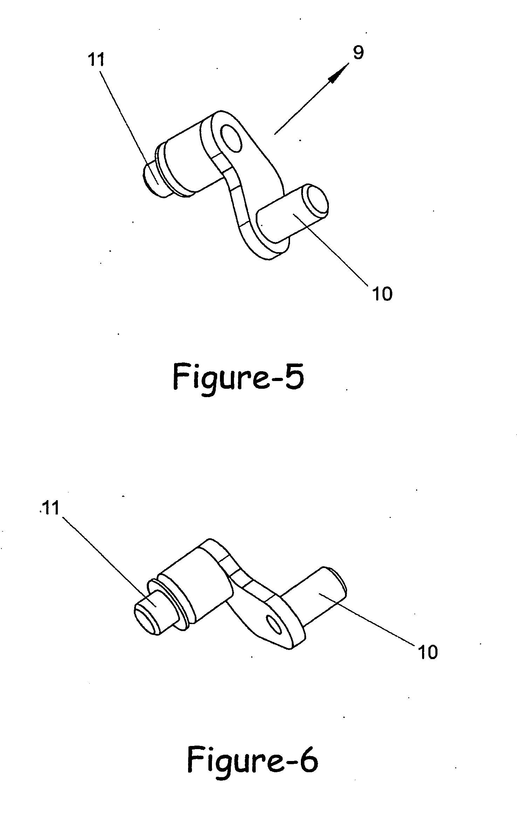

In Figure 4, the detailed view is provided showing the assembly of the rails (6) and the moving window leaf (3) of the vehicle window (1). The connection of the said rails (6) with the moving window leaf (3) is provided by means of the cam mechanisms (9) whose views are provided in Figure 5 and 6. On said cam mechanisms (9), a rail projection (10) which may be connected with the rail canal (7) on the rails (6) and a leaf projection (11) connected with the moving window leaf (3) have been formed. Said leaf projection (11) connects with said moving window leaf (3) to assist the said moving window leaf (3) to be located inside the space present on said fixed window leaf (2) by means of an inwards curvilinear movement.

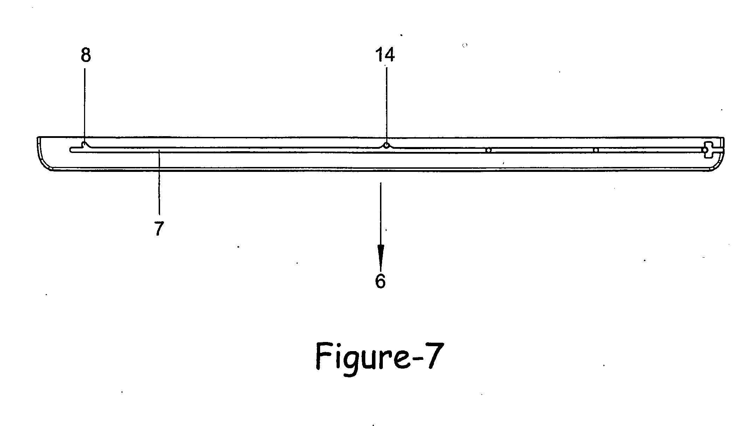

In Figure 7, the top view of the rail (6) is provided. A groove (8) having a curvilinear structure has been formed on said rails (6) to prevent the undesirable movement of the moving leaf (3) due to any shock or stroke that may form after the moving window leaf (3) has approached the fixed window leaf (2) and has been located inside the space (12) formed on the fixed window leaf (2). Said groove (8) has been developed in such a way to prevent the moving window leaf (3) from coming back out as a result of any shock or stroke that may form after the moving window leaf (3) has approached the fixed window leaf (2) and has been located inside the space (12) formed on the fixed window leaf (2), in other words, to prevent the undesirable movement of the moving window leaf (3). Said groove (8) may be formed in a curvilinear structure preferably with different geometrical shapes. Also, a lock pin bearing (14) has been formed on said rails (6) to prevent undesirable movement of said moving window leaf (3). Owing to the locking performed by means of a lock pin (13) that may fit inside said bearing (14), the undesirable movement of the moving window leaf (3) may be prevented.

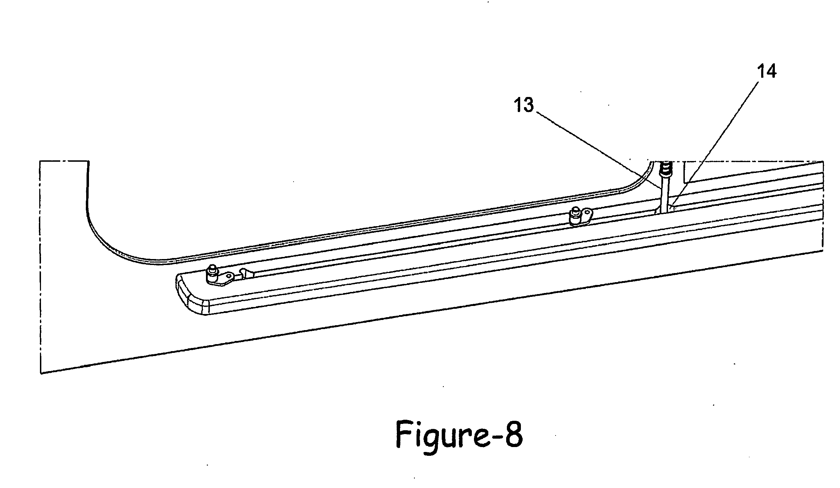

In Figure 8, the view is provided showing the assembly of the rail (6) and the cam mechanisms (9). Said groove (8) is connected with the rail projections (10) formed on the cam mechanisms (9), in order to prevent the moving window leaf (3) from coming back out, i.e. to prevent its undesirable movement, after the moving window leaf (3) has been located inside the space on the fixed window leaf (2). Moreover, a lock pin bearing (14) has been formed, which assists said moving window leaf (3) to be located inside the space (12) present on said fixed window leaf (2) by means of an inwards curvilinear movement. Said lock pin (13) connected inside said lock pin bearing (14) provides the locking in such a way to prevent the undesirable movement of said moving window leaf (3).

The invention may not be limited to the representative embodiments provided in this section. Based on the fundamental elements within the protective scope as defined in the claims and the idea of at least one groove (8) with a curvilinear structure that may be in connection with cam mechanisms (9), at least one lock pin bearing (14) and at least one lock pin (13) which connects with said lock pin bearing (14) to provide locking, for the purpose of preventing the moving leaf (3) from coming back out due to any shock or stroke that may form after the moving window leaf (3) has approached the fixed window leaf (2) and has been located inside the space (12) formed on the fixed window leaf (2), the alternative embodiments that may be realized by the persons skilled in the art will mean the violation of the invention.

## Claims

1. The opening and closing mechanism for the vehicle windows (1) comprising a fixed window leaf (2), at least one moving window leaf (3) which may move on the rails (6) in connection with said fixed leaf (2) and be located inside the space (12) on the fixed window leaf (2), the rail canal (7) formed on said rails (6) and cam mechanisms (9) to provide the connection of said moving window leaf (3) with said rails (6) **characterized in that** it comprises
- at least one groove (8), which is formed on said rails (6), in connection with said cam mechanisms (9) in a way to prevent the uncontrolled movement of said moving window leaf (3) and
- at least one lock pin bearing (14) which assists said moving window leaf (3) to be located inside the space (12) present in said fixed window leaf (2) by means of an inwards curvilinear movement.

2. The opening and closing mechanism according to claim 1 **characterized in that** it comprises at least one rail projection (10) formed on said cam mechanism (9) which is connected with said groove (8) to prevent the undesirable movement of said moving window leaf (3).

3. The opening and closing mechanism according to claim 1 **characterized in that** it comprises at least one leaf projection (11) formed on said cam mechanism (9) which connects with said moving window leaf (3) to assist said moving window leaf (3) to be located inside the space (12) present in said fixed window leaf (2) by means of an inwards curvilinear movement.

4. The opening and closing mechanism according to claim 1 **characterized in that** said groove (8) has been formed in a curvilinear structure preferably with different geometrical shapes.

5. The opening and closing mechanism according to claim 1 **characterized in that** it comprises at least one lock pin (13) which fits inside said lock pin bearing (14) to provide locking in such a way to prevent the undesirable movement of said moving window leaf (3).

## Patentansprüche

1. Öffnungs- und Schließmechanismus für Fahrzeugfenster (1), der einen unbeweglichen Fensterflügel (2), wenigstens einen beweglichen Fensterflügel (3), der sich auf Schienen (6) in Verbindung mit dem unbeweglichen Fensterflügel (2) bewegen und innerhalb eines Raumes (12) an dem unbeweglichen Fensterflügel (2) angeordnet werden kann, einen Schienenkanal (7), der an den Schienen (6) geformt ist, und einen Nockenmechanismus (9), um die Verbindung des beweglichen Fensterflügels (3) mit den Schienen (6) zu gewährleisten, umfasst, **dadurch gekennzeichnet, dass** er Folgendes umfasst:
- wenigstens eine Rille (8), die an den Schienen (6) geformt ist, auf eine solche Weise in Verbindung mit dem Nockenmechanismus (9), dass eine unkontrollierte Bewegung des beweglichen Fensterflügels (3) verhindert wird, und
- wenigstens ein Sperrstiftlager (14), das dazu beiträgt, dass der bewegliche Fensterflügel (3) mit Hilfe einer nach innen gerichteten krummlinigen Bewegung innerhalb des in dem unbeweglichen Fensterflügel (2) vorhandenen Raumes (12) positioniert wird.

2. Öffnungs- und Schließmechanismus nach Anspruch 1, **dadurch gekennzeichnet, dass** er wenigstens einen an dem Nockenmechanismus (9) geformten Schienenvorsprung (10) umfasst, der mit der Rille (8) verbunden ist, um eine unerwünschte Bewegung des beweglichen Fensterflügels (3) zu verhindern.

3. Öffnungs- und Schließmechanismus nach Anspruch 1, **dadurch gekennzeichnet, dass** er wenigstens einen an dem Nockenmechanismus (9) geformten Flügelvorsprung (11) umfasst, der mit dem beweglichen Fensterflügel (3) verbunden ist, um dazu beizutragen, dass der bewegliche Fensterflügel (3) mit Hilfe einer nach innen gerichteten krummlinigen Bewegung innerhalb des in dem unbeweglichen Fensterflügel (2) vorhandenen Raums (12) positioniert wird.

4. Öffnungs- und Schließmechanismus nach Anspruch 1, **dadurch gekennzeichnet, dass** die Rille (8) in einer krummlinigen Struktur, vorzugsweise mit unterschiedlichen geometrischen Formen, geformt worden ist.

5. Öffnungs- und Schließmechanismus nach Anspruch 1, **dadurch gekennzeichnet, dass** er wenigstens einen Sperrstift (13) umfasst, der in das Sperrstiftlager (14) passt, um auf eine solche Weise eine Sperrung zu gewährleisten, dass eine unerwünschte Bewegung des beweglichen Fensterflügels (3) verhindert wird.

## Revendications

1. Mécanisme d'ouverture et de fermeture de vitres de véhicule (1) comprenant un ventail de vitre fixe (2), au moins un vantail de vitre mobile (3) qui peut se déplacer sur les rails (6) en connexion avec ledit vantail fixe (2) et être localisé à l'intérieur de l'espace (12) sur le vantail de vitre fixe (2), le canal de rails (7) formé sur lesdits rails (6) et des mécanismes de came (9) pour assurer la connexion dudit vantail de vitre mobile (3) aux dits rails (6), **caractérisé en ce qu'**il comprend :
- au moins une gorge (8), qui est formée sur lesdits rails (6), en connexion avec lesdits mécanismes de came (9) de manière à empêcher le mouvement incontrôlé dudit vantail de vitre mobile (3) et
- au moins un palier de broche de verrouillage (14) qui aide à localiser ledit vantail de vitre mobile (3) à l'intérieur de l'espace (12) présent dans ledit vantail de vitre fixe (2) au moyen d'un mouvement curviligne vers l'intérieur.

2. Mécanisme d'ouverture et de fermeture selon la revendication 1, **caractérisé en ce qu'**il comprend au moins une projection de rails (10) formée sur ledit mécanisme de came (9) qui est connecté à ladite gorge (8) pour empêcher le mouvement indésirable dudit vantail de vitre mobile (3).

3. Mécanisme d'ouverture et de fermeture selon la revendication 1, **caractérisé en ce qu'**il comprend au moins une projection de vantail (11) formée sur ledit mécanisme de came (9) qui se connecte au dit vantail de vitre mobile (3) pour aider à localiser ledit vantail de vitre mobile (3) à l'intérieur de l'espace (12) présent dans ledit vantail de vitre fixe (2) au moyen d'un mouvement curviligne vers l'intérieur.

4. Mécanisme d'ouverture et de fermeture selon la revendication 1, **caractérisé en ce que** ladite gorge (8) a été formée dans une structure curviligne de préférence avec différentes formes géométriques.

5. Mécanisme d'ouverture et de fermeture selon la revendication 1, **caractérisé en ce qu'**il comprend au moins une broche de verrouillage (13) qui s'adapte à l'intérieur dudit palier de broche de verrouillage (14) pour assurer un verrouillage de manière à empêcher le mouvement indésirable dudit ventail de vitre mobile (3).
